# EUROPEAN PATENT APPLICATION

(11) **EP 4 772 329 A1**
(43) Date of publication of application: **08.07.2026**
(21) Application number: 24859020.0
(22) Date of filing: 05.04.2024
(51) Int. Cl.: B29C 48/68, B29C 48/395, F16L 17/10

(54) **EXTRUDER, CYLINDER FOR EXTRUDER, MONITORING DEVICE, MONITORING METHOD, AND PROGRAM**

(30) Priority: 28.08.2023 JP 2023137865
(71) Applicant: The Japan Steel Works, Ltd., Tokyo 141-0032 (JP)
(72) Inventor: KOIWA, Tetsuya, Tokyo 141-0032 (JP); SUMIDA, Katsumi, Tokyo 141-0032 (JP); OKAMOTO, Akihisa, Tokyo 141-0032 (JP); SAGA, Daigo, Tokyo 141-0032 (JP); IMAMURA, Yukio, Hiroshima-shi Hiroshima 736-8602 (JP)
(74) Representative: Simmons & Simmons LLP (Munich)
(86) International application number: PCT/JP2024/014063
(87) International publication number: WO 2025/046971

(57) **Abstract**

In an extruder (10), in a cylinder (100), the end surfaces of a plurality of unit blocks (101) each having a hole into which a screw can be inserted are connected to each other via a connection portion (130). The extruder (10) has a closed space (133) surrounded by a first gasket (131) and a second gasket (132) surrounding the hole in the connection portion (130). The extruder (10) also has a pressure adjustment unit (160) that is a mechanism capable of adjusting the pressure of the closed space (133), when supplied with a predetermined fluid, to a designated preset pressure higher than the internal pressure of the hole when the extruder (10) is in operation, and a leakage monitoring unit (170) including a sensor capable of detecting the leakage of the fluid in the closed space (133).

## Description

### Technical Field

The present invention relates to an extruder, a barrel for an extruder, a monitoring apparatus, a monitoring method, and program.

### Background Art

Various techniques have been disclosed for a barrel (cylinder) constituting an extruder.

For example, a technique in which, in a twin-screw extruder in which barrel units are connected to form a long barrel, a sealing apparatus is composed of hollow metal ring bodies, through holes are provided in parts of the ring bodies, the ring bodies are connected by a gas chamber, and the gas chamber is filled with an inert gas has been disclosed (Patent Literature 1).

Further, a technique in which a raw material in a pressurized state reaches a packing through a gap between an annular protrusion and an annular recess and enters an annular groove, and the packing is pressed against the outer peripheral surface of the annular protrusion and the inner peripheral surface of the annular recess to perform sealing by utilizing the pressure of the raw material has been disclosed (Patent Literature 2).

### Citation List

### Patent Literature

Patent Literature 1: Japanese Unexamined Patent Application Publication No. H10-235712
Patent Literature 2: Japanese Unexamined Patent Application Publication No. H11-156919

### Summary of Invention

However, in the above-described configurations, the effect of the sealing may be lost due to a fluctuation of the tightening force caused by repeated heating and cooling or a failure or the like of the sealing. In such a case, it is not desired that the pressure in the barrel become higher than the atmospheric pressure, because the gas generated inside the extruder may leak to the outside.

The present disclosure has been made to solve such a problem, and an object thereof is to provide an extruder and the like which prevent gas in a barrel from leaking to the outside.

An extruder according to the present disclosure includes a barrel, a reception port, a discharge port, and a screw. In the barrel, end faces of a plurality of unit blocks each including a hole into which a screw is able to be inserted are connected to each other through a connecting part. The receiving port receives a processing object which has not yet been processed at one end of the barrel. The discharge port discharges the processing object which has been processed to a downstream side at the other end of the barrel. The screw is rotatably housed in the barrel, and conveys the processing object from the reception port to the discharge port. The extruder includes a closed space surrounded by a first gasket surrounding the hole and a second gasket further surrounding the first gasket in the connecting part. The extruder also includes a pressure adjustment unit which is a mechanism configured to be able to adjust a pressure of the closed space when a predetermined fluid is supplied to a predetermined set pressure higher than an internal pressure of the hole when the extruder is operated, and a leakage monitoring unit including a sensor configured to be able to detect leakage of the fluid in the closed space.

In a barrel for an extruder according to the present disclosure, a screw is housed by connecting a plurality of unit blocks to constitute an extruder. The barrel for an extruder includes the unit blocks, a first gasket, a second gasket, a pressure adjustment unit, and a leakage monitoring unit. Each of the unit blocks is a cylindrical member in which a hole into which a screw is able to be inserted is formed. The first gasket is held between a pair of end faces opposed to each other in a connecting part of the connected unit blocks and surrounds a periphery of the hole. The second gasket is held between the pair of end faces and further surrounds a periphery of the first gasket, to thereby form a closed space in the periphery of the hole. The pressure adjustment unit is a mechanism configured to be able to adjust a pressure of the closed space to a predetermined set pressure higher than an internal pressure of the hole when the extruder is operated. The leakage monitoring unit includes a sensor configured to be able to detect leakage of fluid in the closed space.

A monitoring apparatus according to the present disclosure is a monitoring apparatus for a barrel for an extruder. The barrel for an extruder constitutes a barrel in which a plurality of unit blocks in each of which a hole into which a screw is able to be inserted is formed are connected to each other through two annular gaskets, to thereby form a closed space surrounding the hole in a connecting part. The monitoring apparatus includes a barrel data reception unit, a pressure setting unit, a leakage data reception unit, and a notification unit. The barrel data reception unit receives data about an internal pressure at a predetermined position in the barrel of an extruder that is operating. The pressure setting unit sets a pressure of fluid supplied to the closed space so that a pressure of the closed space becomes higher than the internal pressure. The leakage data reception unit receives, from a leakage monitoring unit configured to detect leakage of the fluid in the closed space, data about the leakage. When leakage of the fluid is detected, the notification unit notifies a user of information about the detection.

A monitoring method according to the present disclosure is a method for monitoring a barrel for an extruder constituting a barrel in which a plurality of unit blocks in each of which a hole into which a screw is able to be inserted is formed are connected to each other through two annular gaskets, to thereby form a closed space surrounding the hole in a connecting part. The monitoring method includes receiving data about an internal pressure at a predetermined position in the barrel of an extruder that is operating, and setting a set pressure of the closed space so that a pressure of the closed space becomes higher than the internal pressure. The monitoring method also includes performing monitoring in such a manner that leakage of the fluid in the closed space is able to be detected, and notifying, when leakage of the fluid is detected, a user of information about the detection.

A program according to the present disclosure is a program for a monitoring method performed by a monitoring apparatus for a barrel for an extruder. The barrel for an extruder constitutes a barrel in which a plurality of unit blocks in each of which a hole into which a screw is able to be inserted is formed are connected to each other through two annular gaskets, to thereby form a closed space surrounding the hole in a connecting part. The monitoring method includes receiving data about an internal pressure at a predetermined position in the barrel of an extruder that is operating, and setting a pressure of fluid supplied to the closed space so that a pressure of the closed space becomes higher than the internal pressure. The monitoring method also includes receiving, from a leakage monitoring unit configured to detect leakage of the fluid in the closed space, data about the leakage, and notifying, when leakage of the fluid is detected, a user of information about the detection.

According to the present disclosure, it is possible to provide an extruder, a barrel for an extruder, a monitoring apparatus, a monitoring method, and a program which prevent gas in a barrel from leaking to the outside.

### Brief Description of Drawings

Fig. 1 is a diagram of an overall configuration of an extruder according to a first embodiment;
Fig. 2 is a block diagram of a monitoring apparatus according to the first embodiment;
Fig. 3 is a flowchart of a monitoring method performed by the monitoring apparatus according to the first embodiment;
Fig. 4 is a diagram of an overall configuration of an extruder according to a second embodiment;
Fig. 5 is a diagram of an overall configuration of an extruder according to a third embodiment;
Fig. 6 is a block diagram of a monitoring apparatus according to the third embodiment;
Fig. 7 is a flowchart of a monitoring method performed by the monitoring apparatus according to the third embodiment;
Fig. 8 is a diagram of an overall configuration of an extruder;
Fig. 9 is a perspective view of a unit block; and
Fig. 10 is a partial cross-sectional view of a barrel.

### Description of Embodiments

The present invention will be described hereinafter through embodiments of the invention. However, the invention according to the scope of the claims is not limited to the following embodiments. Further, all the components described in the embodiments are not necessarily essential as means for solving the problem. In order to clarify the description, the following descriptions and the drawings are partially omitted and simplified as appropriate. Note that the same elements are denoted by the same reference symbols throughout the drawings, and redundant descriptions are omitted as necessary.

### <First Embodiment>

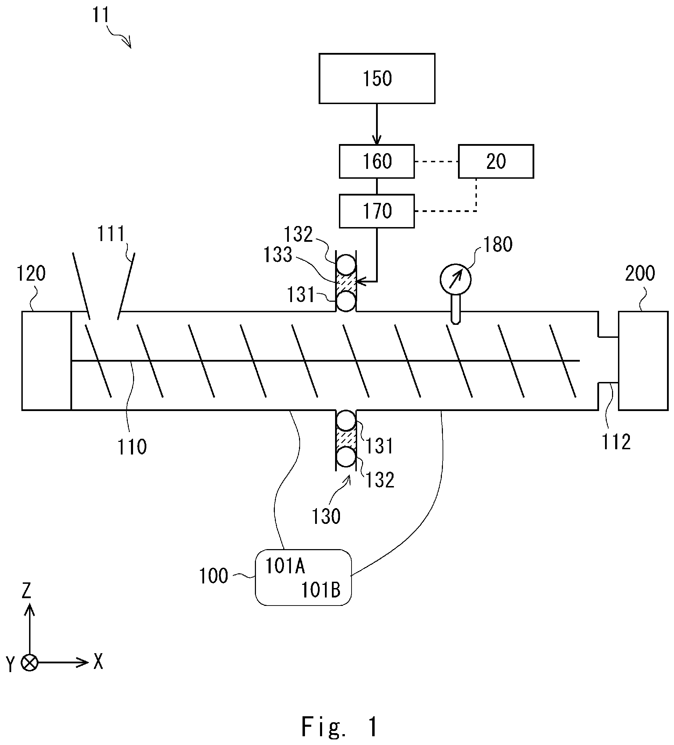

Embodiments of the present invention will be described hereinafter with reference to the drawings. Fig. 1 is a diagram of an overall configuration of an extruder 11 according to a first embodiment. In order to facilitate understanding of the extruder 11, the components thereof are schematically shown in Fig. 1.

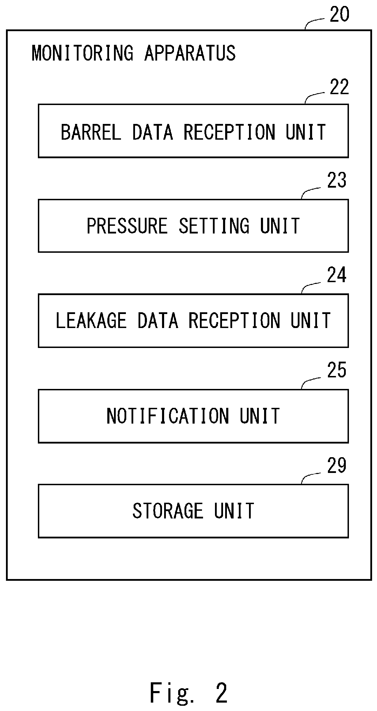

Note that in Fig. 1, a right-handed orthogonal coordinate system is shown for explaining the positional relationship among the components. The Z-axis positive direction coincides with the vertically upward direction. The XY plane coincides with the horizontal plane. Further, in Fig. 2 and the subsequent drawings, when an orthogonal coordinate system is shown, the X-, Y-, and Z-axis directions in the orthogonal coordinate system coincide with the X-, Y-, and Z-axis directions, respectively, shown in Fig. 1.

The extruder 11 according to the present disclosure includes, as main components, a barrel 100, a reception port 111, a discharge port 112, and screw 110. The extruder 11 also includes a monitoring apparatus 20, a driving apparatus 120, a connecting part 130, a fluid supply unit 150, a pressure adjustment unit 160, a leakage monitoring unit 170, and a barrel data measurement unit 180.

In the barrel 100, end faces of a plurality of unit blocks 101 including holes into which the screw 110 can be inserted are connected to each other through the connecting part 130. The barrel 100 shown in Fig. 1 is formed by connecting unit blocks 101A and 101B to each other through the connecting part 130.

Note that, in the following description, in a case where a plurality of the unit blocks 101 are indicated, the unit block shown with a reference numeral followed by an alphabetic character, e.g., the "unit block 101A", is a single component. In a case where the unit blocks are indicated collectively, it is assumed that a reference numeral is not followed by an alphabetic character, e.g., the "unit block 101".

The reception port 111 receives a processing object which has not yet been processed at one end of the barrel 100 (the X-axis negative side in Fig. 1).

The discharge port 112 discharges the processing object which has been processed to a downstream side at the other end of the barrel 100 (the X-axis positive side in Fig. 1). The extruder 11 discharges the processing object at the discharge port 112 and supplies it to a post-processing unit 200. The post-processing unit 200 further processes the processing object received from the discharge port 112.

The screw 110 is rotatably housed in the barrel 100 and convey the processing object from the reception port 111 to the discharge port 112. Further, the screw 110 is driven by the driving apparatus 120. The driving apparatus 120 includes a motor and a reduction gear and rotates the screw 110 at a desired rotation speed.

The connecting part 130 is a part where the unit block 101A and the unit block 101B are connected to each other. The connecting part 130 includes a first gasket 131, a second gasket 132 and a closed space 133.

The first gasket 131 is an annular gasket fixed so as to surround a hole of the unit block 101 into which the screw 110 is inserted. The first gasket 131 is held between the unit block 101A and the unit block 101B. By this configuration, the first gasket 131 separates the atmosphere inside the first gasket 131 from the atmosphere outside the first gasket 131.

The second gasket 132 is an annular gasket fixed so as to surround the first gasket 131. Like the first gasket 131, the second gasket 132 is held between the unit block 101A and the unit block 101B. By this configuration, the second gasket 132 separates the atmosphere inside the second gasket 132 from the atmosphere outside the second gasket 132.

The closed space 133 is a space surrounded by the unit block 101A, the unit block 101B, the first gasket 131, and the second gasket 132. That is, the closed space 133 is a space between the unit block 101A and the unit block 101B, outside the first gasket 131, and inside the second gasket 132. The closed space 133 is separated from the space inside the barrel 100 by the first gasket 131. Further, the closed space 133 is separated from the space outside the barrel 100 by the second gasket 132.

The closed space 133 is filled with a predetermined fluid supplied from the fluid supply unit 150. The predetermined fluid is, for example, an inert gas such as nitrogen or argon. The predetermined fluid may be any other gas or liquid which is less likely to affect the reaction inside the barrel 100. Further, at this time, the pressure of the closed space 133 filled with the fluid is set to be higher than the internal pressure of the barrel 100 in the extruder 11 that is processing the processing object. Thus, when the sealing function of the first gasket 131 is deteriorated, the fluid with which the closed space 133 is filled flows into the barrel 100 in the extruder 11.

For example, the fluid supply unit 150 supplies compressed gas to the closed space 133 through the pressure adjustment unit 160. Alternatively, the fluid supply unit 150 pressure-feeds the fluid stored in a tank to the closed space 133 through the pressure adjustment unit 160. In this case, the fluid supply unit 150 may include a tank in which fluid is stored and a pump for pressure-feeding the stored fluid.

The pressure adjustment unit 160 is a mechanism capable of adjusting the pressure of the closed space 133 when a predetermined fluid is supplied from the fluid supply unit 150 to a predetermined set pressure higher than the internal pressure of the hole when the extruder 11 is operated. The pressure adjustment unit 160 is, for example, a pressure adjustment valve or a pressure regulator. The pressure adjustment unit 160 has a function of adjusting the pressure of the closed space 133 to a predetermined set pressure.

The set pressure can be set higher than the internal pressure of the barrel 100 in the vicinity of the connecting part 130 by about 0.1 to 1 megapascal. The pressure adjustment unit 160 adjusts the set pressure manually or automatically. When the pressure adjustment unit 160 is configured to adjust the set pressure automatically, the pressure adjustment unit 160 is connected to the monitoring apparatus 20 so that they can communicate with each other, and receives data about the set pressure calculated by the monitoring apparatus 20.

The leakage monitoring unit 170 includes a sensor capable of detecting leakage of fluid in the closed space 133. The situation in which leakage of fluid occurs is a situation in which the sealing function of the first gasket 131 or the second gasket 132 is deteriorated.

The set pressure of the closed space 133 is higher than the atmospheric pressure and higher than the internal pressure of the barrel 100. Therefore, when the sealing function of the first gasket 131 or the second gasket 132 is deteriorated, the fluid remaining in the closed space 133 leaks out of the closed space 133. As a result, the internal pressure (the set pressure) of the closed space 133 is reduced at least temporarily. Further, in this case, after the pressure of the closed space 133 is reduced temporarily, the pressure adjustment unit 160 pressure-feeds the fluid into the closed space 133 in order to maintain the set pressure. In this case, even if the pressure of the closed space 133 is stabilized, the leakage of the fluid continues. Further, in this case, the larger the amount of leakage of the fluid, the larger the flow rate of the fluid in the closed space 133. Therefore, by monitoring the change in the flow of the fluid or the pressure in the closed space 133, the extruder 11 can detect that the sealing function of the first gasket 131 or the second gasket 132 is deteriorated.

The leakage monitoring unit 170 is, for example, a flowmeter capable of detecting the flow of fluid in the closed space 133. When no leakage has occurred in the closed space 133, the flowmeter does not detect the flow of fluid. That is, in this case, the flow rate indicated by the flowmeter is zero. On the other hand, when leakage has occurred in the closed space 133, the flowmeter detects the flow of fluid associated with the degree of leakage. That is, the larger the value of the flow rate detected by the flowmeter, the larger the amount of fluid leaking from the closed space 133. The leakage monitoring unit 170 may be a pressure gauge capable of detecting the fluctuations of the pressure in the closed space 133. By including the leakage monitoring unit 170, the extruder 11 can, when the sealing function of the first gasket 131 or the second gasket 132 of the barrel 100 is deteriorated, detect the deterioration. That is, the leakage monitoring unit 170 may be a flow sensor capable of detecting the flow of the fluid caused by leakage of the fluid in the closed space. Further, the leakage monitoring unit 170 may be a pressure sensor capable of detecting the change in the pressure of the fluid caused by leakage of the fluid in the closed space.

The leakage monitoring unit 170 is connected to the monitoring apparatus 20 so that they can communicate with each other, and supplies the monitoring apparatus 20 with information about leakage of fluid in the closed space 133. Thus, the extruder 11 can suitably provide information about monitoring of the barrel 100 to a user using the monitoring apparatus 20.

The barrel data measurement unit 180 measures barrel data. The barrel data is, for example, data about the internal pressure of the barrel 100. In this case, the barrel data measurement unit 180 is a pressure gauge which measures the internal pressure of the barrel 100.

The barrel data measurement unit 180 is used to set the internal pressure of the closed space 133. That is, a user recognizes the internal pressure of the barrel 100 in the connecting part 130 from the internal pressure of the barrel 100 measured by the barrel data measurement unit 180. Further, a user sets the pressure of the closed space 133 to be higher than the internal pressure of the barrel 100 in the connecting part 130. That is, the barrel data measurement unit 180 measures the internal pressure of the barrel 100, so that the extruder 11 can suitably set the set pressure of the fluid with which the closed space 133 is filled.

The barrel data measurement unit 180 is preferably installed in the vicinity of the connecting part 130. However, the position where the barrel data measurement unit 180 is installed is not limited to the vicinity of the connecting part 130 when the distribution of the pressure in the barrel 100 is known. The barrel data measurement unit 180 may, for example, acquire barrel data about the internal pressure in the vicinity of the discharge port 112.

The barrel data measurement unit 180 may be a pressure gauge which measures the internal pressures at a plurality of different measurement positions along the direction in which the barrel extends. In this case, the pressure adjustment unit 160 can set the pressure of the fluid with which the closed space 133 is filled by a set pressure higher than the pressure in the vicinity of the closed space 133 estimated from the internal pressures measured at the plurality of different measurement positions.

When the relationship between the temperature and the internal pressure in the barrel 100 is known in advance, the barrel data measurement unit 180 may be a thermometer instead of a pressure gauge. In this case, the barrel data is data about the temperature inside the barrel 100.

Note that, when the internal pressure of the barrel 100 is known without using the barrel data measurement unit 180, the extruder 11 may not include the barrel data measurement unit 180.

The post-processing unit 200 receives a processing object discharged from the extruder 11 and processes the received processing object. The post-processing unit 200 may, for example, have a function of storing an object received from the discharge port 112 by being connected to the barrel 100 on the downstream side of the discharge port 112. The post-processing unit 200 may further have a function of sending gas received from the discharge port 112 to another apparatus.

Next, the monitoring apparatus 20 will be described with reference to Fig. 2. Fig. 2 is a block diagram of the monitoring apparatus 20 according to the first embodiment. The monitoring apparatus 20 is an apparatus which monitors gas leakage from the barrel 100 in the extruder 11. The monitoring apparatus 20 is, for example, a server, a personal computer, or a tablet terminal. The monitoring apparatus 20 may be a dedicated apparatus including an arithmetic apparatus such as a Central Processing Unit (CPU). The monitoring apparatus 20 includes, as main components, a barrel data reception unit 22, a pressure setting unit 23, a leakage data reception unit 24, a notification unit 25, and a storage unit 29.

Note that, although not shown, the monitoring apparatus 20 may include an interface for inputting predetermined information and outputting predetermined information. The means for inputting information in this case may be, for example, a button, a switch, a keyboard, and the like. Further, the means for outputting information in this case may be, for example, a display, a speaker, a lamp, and the like.

The barrel data reception unit 22 receives barrel data about the internal pressure at a predetermined position in the barrel 100 of the extruder 11 that is operating. The barrel data reception unit 22 may receive barrel data by an information input operation performed by a user. Further, the barrel data reception unit 22 may directly receive barrel data from the barrel data measurement unit 180 when it is connected to the barrel data measurement unit 180 so that they can communicate with each other.

The pressure setting unit 23 calculates a set pressure based on barrel data. The pressure setting unit 23 sets the pressure of the fluid supplied to the closed space 133 so that the pressure of the closed space 133 becomes higher than the internal pressure of the barrel 100. That is, the pressure setting unit 23 recognizes the internal pressure of the barrel 100 from the received barrel data and sets a value higher than the internal pressure of the barrel 100 as the internal pressure of the closed space 133 by a predetermined algorithm.

Further, the pressure setting unit 23 controls the pressure adjustment unit 160 so that the pressure of the closed space 133 becomes the set pressure. That is, the pressure setting unit 23 controls the adjustment of the adjustment valve of the pressure adjustment unit 160 based on the calculated set pressure.

Note that the pressure setting unit 23 may present to a user a pressure to be adjusted by the pressure adjustment unit 160 or the set pressure. In this case, the pressure setting unit 23 presents a value of pressure for allowing a user to manually adjust the pressure adjustment unit 160.

The pressure setting unit 23 may set a set pressure based on data about the internal pressures at a plurality of points in time in a predetermined period. More specifically, the pressure setting unit 23 may calculate a maximum value of data about the internal pressures at a plurality of points in time in a predetermined period, and set a value higher than the maximum value by a predetermined value as the pressure of the closed space 133. The pressure setting unit 23 may also calculate a moving average of data about the internal pressures at a plurality of points in time in a predetermined period, and set a value higher than the calculated moving average by a predetermined value as the pressure of the closed space 133. By this configuration, the extruder 11 may more suitably calculate the pressure of the closed space 133. In this case, the extruder 11 may dynamically set the pressure of the closed space 133. Therefore, for example, when the post-processing unit 200 discharges the inside gas intermittently or dynamically, the extruder 11 may set a set pressure corresponding to the pressure of the post-processing unit 200.

Further, when the barrel data measurement unit 180 is a pressure gauge which measures the internal pressures at a plurality of different measurement positions along the direction in which the barrel 100 extends, the pressure setting unit 23 calculates the pressure of the closed space 133 based on the internal pressures measured at the plurality of different measurement positions. In this case, the pressure setting unit 23 estimates the internal pressure in the vicinity of the connecting part 130 from the internal pressures at the plurality of different measurement positions, and sets a pressure higher than the estimated internal pressure as the pressure of the closed space 133.

The leakage data reception unit 24 receives, from the leakage monitoring unit 170 which detects leakage of fluid in the closed space 133, data about leakage. The data about leakage is data indicating leakage of fluid filled and sealed in the closed space 133. The data about leakage is data indicating the flow of fluid in the closed space 133. The data about leakage may indicate a change in the pressure of the closed space 133.

The notification unit 25 determines whether or not leakage of fluid has occurred in the closed space 133 from the data about leakage. Further, when leakage of fluid is detected, the notification unit 25 notifies a user that leakage of fluid is detected (detection information). The means for notifying a user of detection information is, for example, the above-described means for outputting information. Alternatively, the means for notifying a user of detection information may be communication means. In this case, the notification unit 25 notifies a communication terminal carried by a user of detection information.

The storage unit 29 includes a nonvolatile memory such as a flash memory. The storage unit 29 stores a program for implementing functions according to the present disclosure.

The monitoring apparatus 20 has been described above. By the configuration described above, the monitoring apparatus 20 can prevent gas inside the barrel 100 from leaking to the outside.

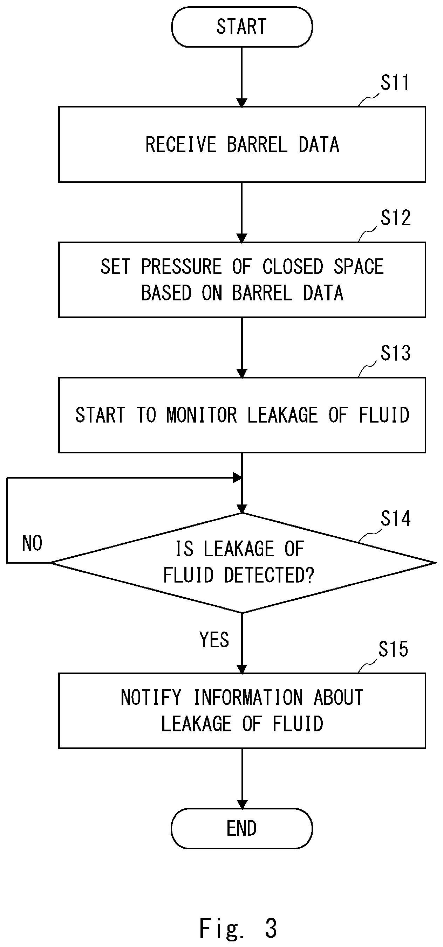

Next, a method performed by the monitoring apparatus 20 will be described with reference to Fig. 3. Fig. 3 is a flowchart of a monitoring method performed by the monitoring apparatus 20 according to the first embodiment. The monitoring method according to Fig. 3 is a method for monitoring a barrel for an extruder constituting a barrel in which a plurality of unit blocks in each of which a hole into which a screw can be inserted is formed are connected to each other through two annular gaskets, to thereby form a closed space surrounding the hole in a connecting part.

First, the barrel data reception unit 22 of the monitoring apparatus 20 receives data (barrel data) about the internal pressure at a predetermined position in the barrel 100 of the extruder 11 that is operating (Step S11). The barrel data reception unit 22 supplies the received barrel data to the pressure setting unit 23.

Next, the pressure setting unit 23 sets the pressure of the closed space 133 so that the pressure of the closed space 133 becomes higher than the internal pressure (Step S12). When the pressure setting unit 23 sets the pressure of the closed space 133, the pressure adjustment unit 160 adjusts the pressure of fluid supplied from the fluid supply unit 150.

Next, the leakage data reception unit 24 starts to monitor leakage of the fluid in the closed space 133 (Step S13).

Next, the notification unit 25 determines whether or not leakage of the fluid is detected (Step S14). If the notification unit 25 does not determine that leakage of the fluid is detected (Step S14: NO), the notification unit 25 repeats Step S14. If the notification unit 25 determines that leakage of the fluid is detected (Step S14: YES), the notification unit 25 notifies a user of information about the leakage of the fluid (Step S15). When the notification unit 25 notifies a user of information about the leakage of the fluid, the monitoring apparatus 20 ends a series of the processes.

Although the first embodiment has been described above, the configuration of the extruder 11 according to the first embodiment is not limited to the above-described configuration. For example, the extruder 11 may include a heater which heats the barrel 100.

The barrel data received by the barrel data reception unit 22 may be a predicted value calculated using simulation. In this case, the predicted value may be calculated, for example, by inputting the type of gas generated inside the extruder 11 and the temperature of the gas.

The fluid with which the closed space 133 is filled is preferably nitrogen. However, it may be an inert gas such as carbon dioxide, steam, or argon. Further, the fluid may be a liquid such as oil. The leakage monitoring unit 170 may monitor pressure differences at a plurality of positions in the closed space 133 that are separated from each other.

As described above, according to this embodiment, it is possible to provide an extruder, a barrel for an extruder, a monitoring apparatus, a monitoring method, and a program which prevent gas in a barrel from leaking to the outside.

### <Second Embodiment>

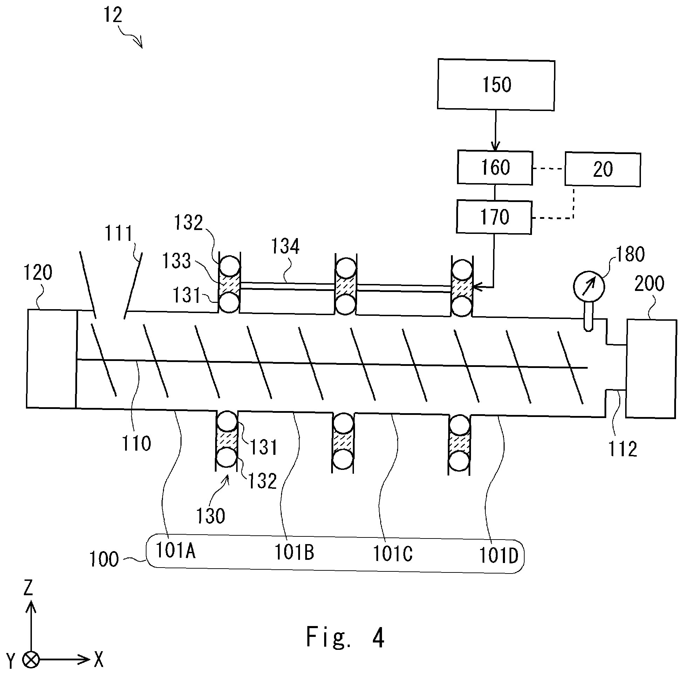

Fig. 4 is a diagram of an overall configuration of an extruder 12 according to a second embodiment. The extruder 12 shown in Fig. 4 includes unit blocks 101A to 101D as the unit blocks 101 constituting the barrel 100. As a result of this configuration, the extruder 12 includes three connecting parts 130. Further, the closed spaces 133 of the three connecting parts 130 of the extruder 12 are connected to each other by a relay unit 134. That is, the unit block 101 includes the closed space 133 extending over a plurality of the connecting parts 130.

By the above-described configuration, the pressure adjustment unit 160 supplies fluid to the closed space 133 extending over the three connecting parts 130. Further, the leakage monitoring unit 170 detects leakage of fluid in the closed space 133 extending over the three connecting parts 130.

By the above configuration, the extruder 12 can detect that the sealing functions of the first gaskets 131 and the second gaskets 132 in the closed space 133 extending over a plurality of the unit blocks 101 are deteriorated.

As described above, according to this embodiment, it is possible to provide an extruder, a barrel for an extruder, a monitoring apparatus, a monitoring method, and a program which prevent gas in a barrel from leaking.

### <Third Embodiment>

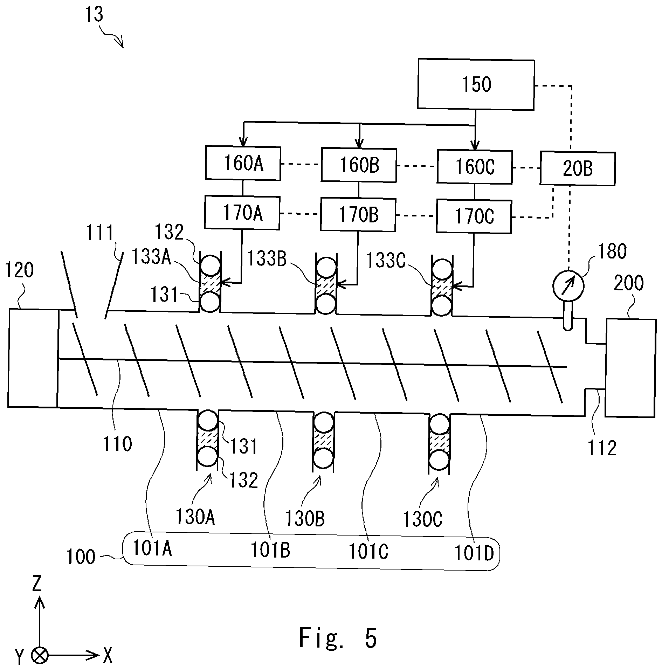

Next, a third embodiment will be described. Fig. 5 is a diagram of an overall configuration of an extruder 13 according to the third embodiment. The extruder 13 includes the unit blocks 101A to 101D as the unit blocks 101 constituting the barrel 100. As a result of this configuration, the extruder 13 includes a connecting part 130A, a connecting part 130B, and a connecting part 130C.

The connecting part 130A is present between the unit blocks 101A and 101B. The connecting part 130B is present between the unit blocks 101B and 101C. The connecting part 130C is present between the unit blocks 101C and 101D. Further, the connecting part 130A includes a closed space 133A. The connecting part 130B includes a closed space 133B. The connecting part 130C includes a closed space 133C. The closed space 133A, the closed space 133B, and the closed space 133C are spaces independent of each other.

The closed space 133A is connected to a pressure adjustment unit 160A and a leakage monitoring unit 170A. Similarly, the closed space 133B is connected to a pressure adjustment unit 160B and a leakage monitoring unit 170B. The closed space 133C is connected to a pressure adjustment unit 160C and a leakage monitoring unit 170C. The fluid supply unit 150 supplies fluid to each of the pressure adjustment unit 160A, the pressure adjustment unit 160B, and the pressure adjustment unit 160C.

In a monitoring apparatus 20B according to this embodiment, the pressure adjustment unit 160A, the pressure adjustment unit 160B, and the pressure adjustment unit 160C are connected to each other so that they can be controlled independently. Further, the monitoring apparatus 20B receives data about leakage from each of the leakage monitoring unit 170A, the leakage monitoring unit 170B, and the leakage monitoring unit 170C. That is, the monitoring apparatus 20B receives data about leakage of the closed space 133A from the leakage monitoring unit 170A, data about leakage of the closed space 133B from the leakage monitoring unit 170B, and data about leakage of the closed space 133C from the leakage monitoring unit 170C.

That is, the barrel 100 of the extruder 13 includes the closed space 133 in each of a plurality of the connecting parts 130 provided along the direction in which the barrel 100 extends. Further, each of a plurality of the closed spaces 133 includes the pressure adjustment unit 160 and the leakage monitoring unit 170.

Further, the monitoring apparatus 20B according to this embodiment is connected to the barrel data measurement unit 180 so that they can communicate with each other, and acquires barrel data directly from the barrel data measurement unit 180. The monitoring apparatus 20B according to this embodiment is also connected to the fluid supply unit 150 so that they can communicate with each other. By this configuration, the monitoring apparatus 20B may control the operation of the fluid supply unit 150.

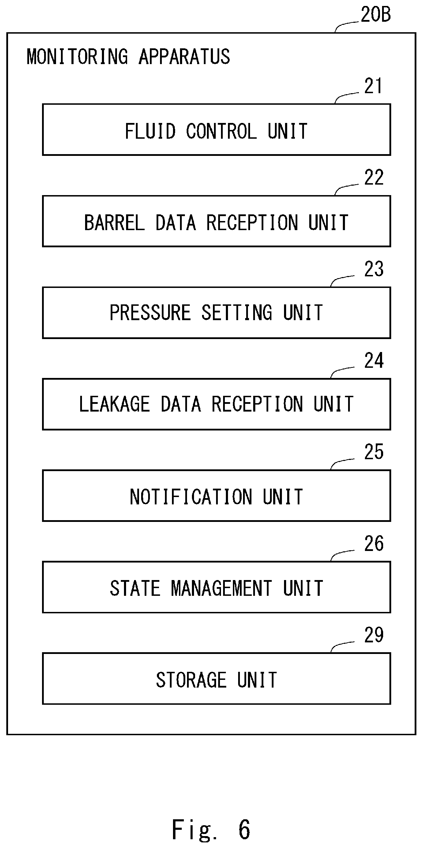

Fig. 6 is a block diagram of the monitoring apparatus 20B according to the third embodiment. The monitoring apparatus 20B differs from the monitoring apparatus 20 in that it includes a fluid control unit 21 and a state management unit 26.

The fluid control unit 21 controls the fluid supply unit 150. By doing so, for example, the fluid control unit 21 can start supplying fluid from the fluid supply unit 150 after the extruder 13 starts operating.

The pressure setting unit 23 according to this embodiment can set, in a plurality of the pressure adjustment units 160, pressures independent of each other.

The state management unit 26 manages the state of each of a plurality of the leakage monitoring units 170. That is, the state management unit 26 can identify, for example, the closed space 133 where the reduction of pressure is detected among the closed spaces 133 of the plurality of connecting parts 130. More specifically, the state management unit 26 may receive data about leakage accompanied by an identifier from the leakage monitoring unit 170. Alternatively, the state management unit 26 may include separate interfaces for receiving data about leakage from the leakage monitoring units 170A, 170B, and 170C.

When one of the plurality of the leakage monitoring units 170 detects leakage of fluid, the notification unit 25 sends a notification to a user so that the user can identify the connecting part 130 where the leakage is detected. By doing so, maintenance of the sealing function of the extruder 13 can be facilitated. Further, an extruder 13 can provide monitoring data of the barrel 100 to a user using the monitoring apparatus 20B in a unified manner.

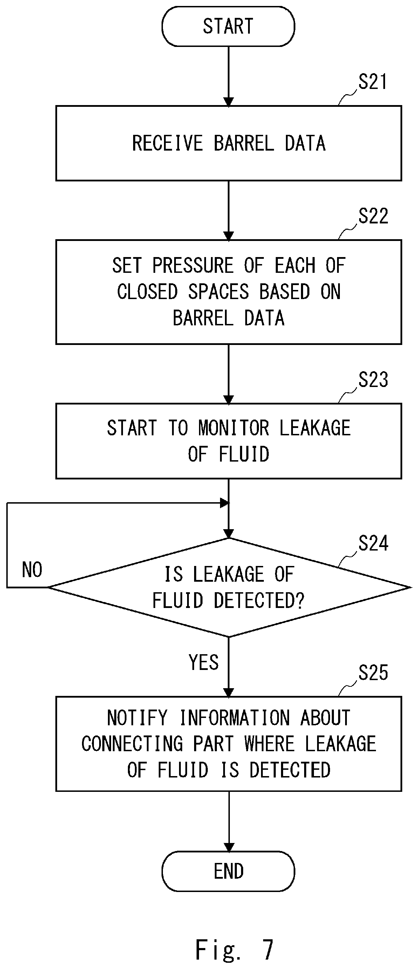

Fig. 7 is a flowchart of a monitoring method performed by the monitoring apparatus 20B according to the third embodiment.

First, the barrel data reception unit 22 of the monitoring apparatus 20B receives barrel data about the internal pressure at a predetermined position in the barrel 100 of the extruder 11 that is operating from the barrel data measurement unit 180 (Step S21). The barrel data reception unit 22 supplies the received barrel data to the pressure setting unit 23.

Next, the pressure setting unit 23 sets the pressures of the closed spaces 133A, 133B, and 133C so that the pressures of these closed spaces 133 become higher than the internal pressures in the vicinities of their respective connecting parts 130 (Step S22). When the pressure setting unit 23 sets the pressures, the fluid control unit 21 starts to supply fluid from the fluid supply unit 150. Further, the pressure adjustment unit 160 adjusts the pressures of the closed spaces 133.

Next, the leakage data reception unit 24 starts to monitor leakage of the fluid in each of the closed spaces 133 (Step S23).

Next, the notification unit 25 determines whether or not leakage of the fluid is detected (Step S24). If the notification unit 25 does not determine that leakage of the fluid is detected (Step S24: NO), the notification unit 25 repeats Step S24. If the notification unit 25 determines that leakage of the fluid is detected (Step S24: YES), the notification unit 25 notifies a user of information about the connecting part where leakage of the fluid is detected (Step S25). Note that the notification unit 25 also notifies a user of information about the connecting part 130 where leakage of the fluid has occurred as information about leakage of the fluid. When the notification unit 25 notifies a user of information about the connecting part where leakage of the fluid is detected, the monitoring apparatus 20 ends a series of the processes.

The third embodiment has been described above. According to this embodiment, it is possible to provide an extruder, a barrel for an extruder, a monitoring apparatus, a monitoring method, and a program which prevent gas in a barrel from leaking and facilitate maintenance of the sealing function of the barrel.

### (Configuration of Extruder)

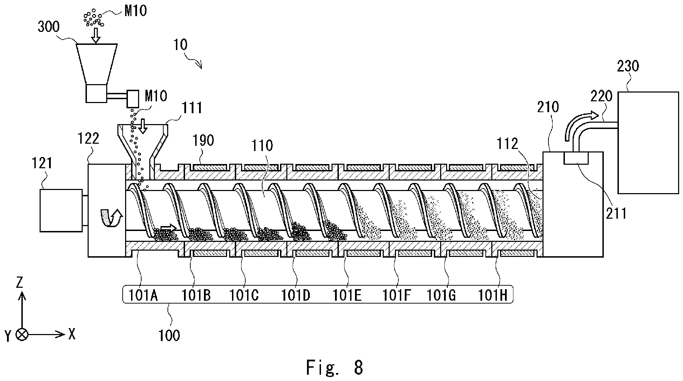

Next, an aspect of an extruder in which the present disclosure may be adopted will be described. Fig. 8 is a diagram of an overall configuration of an extruder 10. In order to facilitate understanding of the extruder 10, a part thereof is shown in a cross-sectional view in Fig. 8. The extruder 10 is an apparatus which performs chemical recycling by depolymerizing waste plastics for reuse. The extruder 10 includes, as main components, the barrel 100, the screw 110, the reception port 111, the discharge port 112, a motor 121, a reduction gear 122, a temperature adjustment unit 190, and a storage part 210.

The barrel 100 is formed by connecting a plurality of the unit blocks 101 in the direction in which the barrel 100 extends. The barrel 100 is formed by unit blocks 101A to 101H. The reception port 111 is provided on the upstream side of the barrel 100. A raw-material feeder 300 is shown above the reception port 111. The raw-material feeder 300 supplies a raw material M10 to the reception port 111 by a predetermined amount.

The barrel 100 houses the screw 110. The screw 110 is rotationally driven by the motor 121 and the reduction gear 122. The screw 110 conveys the raw material M10 received from the reception port 111 to the downstream side. Note that the screw 110 basically includes a helical groove; however, it may have an uneven shape or the like for kneading the raw material M10 and applying a shearing force in an area where depolymerization is promoted.

The temperature adjustment unit 190 is disposed near the barrel 100. The temperature adjustment unit 190 is a heater which heats the barrel 100 from the outer periphery of the barrel 100. The extruder 10 depolymerizes the raw material M10 by heating and stirring the raw material M while conveying it toward the downstream side. The discharge port 112 is provided on the downstream side of the barrel 100. The discharge port 112 is connected to the storage part 210.

A plurality of kinds of substances such as gas, liquid, and a residue in the form of a slurry generated as a result of depolymerization are supplied from the discharge port 112 to the storage part 210. The storage part 210 supplies gas to a recovery apparatus 230 through the pipe 220 by opening an exhaust valve 211. The recovery apparatus 230 liquefies the recovered gas by a condenser or the like. The liquid and residue accumulated in the storage part 210 are periodically recovered.

By the above-described configuration, the extruder 10 thermally decomposes or depolymerizes the raw material M10, which is an object to be processed, in a suitable manner. The extruder 10 discharges the gas, liquid, and residue generated by the depolymerization during the conveyance to the storage part 210. In this process, the internal pressure of the barrel 100 is higher than the atmospheric pressure. The unit blocks 101 constituting the barrel 100 are sealed with gaskets. However, with the long-term use of the extruder 10, metal fatigue or the like may occur in the fastening parts between the unit blocks 101 due to repeated heating and cooling. Further, the sealing function of the gasket may be deteriorated or lost by the above action. Therefore, by adopting the above-described configuration for the extruder 10, the barrel 100 of the extruder 10 can prevent gas generated inside the barrel 100 from leaking to the outside of the barrel 100.

### (Configuration of Unit Block)

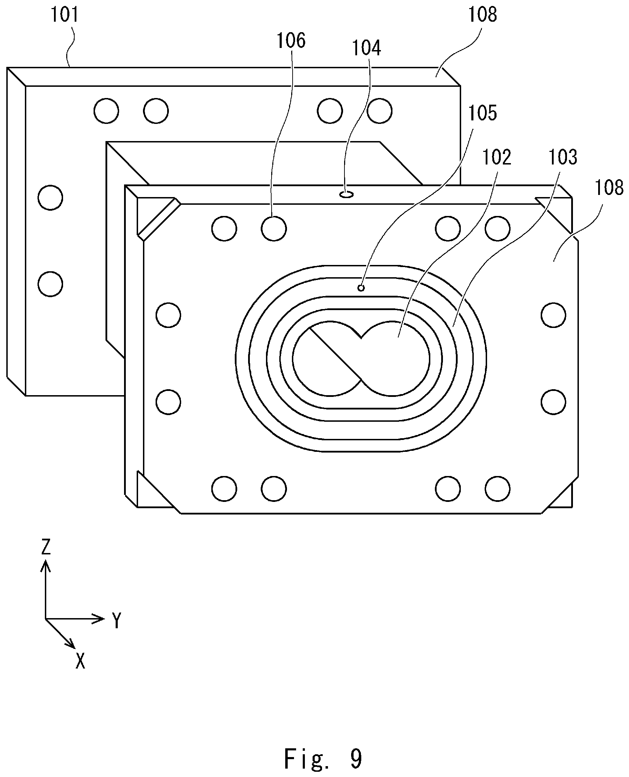

Next, the unit block will be described. Fig. 9 is a perspective view of the unit block 101. The unit block 101 is a cylindrical block including a hole 102 which is a through hole extending parallel to the X-axis. The hole of the unit block 101 shown in Fig. 9 has a shape in which two cylinders partially overlap each other. This is because the unit block 101 constitutes the barrel 100 of the twin-screw extruder. The unit block 101 includes a flange unit 108 orthogonal to the hole 102 at a position where it is connected to another adjacent unit block 101.

A plurality of connecting holes 106 into which fastening members are inserted are provided in the flange unit 108. Further, the flange unit 108 includes a recessed part 103, a fluid inlet 104, and a fluid supply port 105. The recessed part 103 is a space for forming the closed space 133, where the first gasket 131 and the second gasket 132 are installed.

The fluid inlet 104 is an opening of the hole passing through the flange unit 108. The fluid supply port 105 is the other opening of the hole connected to the fluid inlet 104 and is provided in the recessed part 103. The fluid inlet 104 is an inlet for receiving fluid supplied from the pressure adjustment unit 160. The fluid supply port 105 is an opening for filling the closed space 133 with fluid supplied from the pressure adjustment unit 160.

### (Configuration of Closed Space)

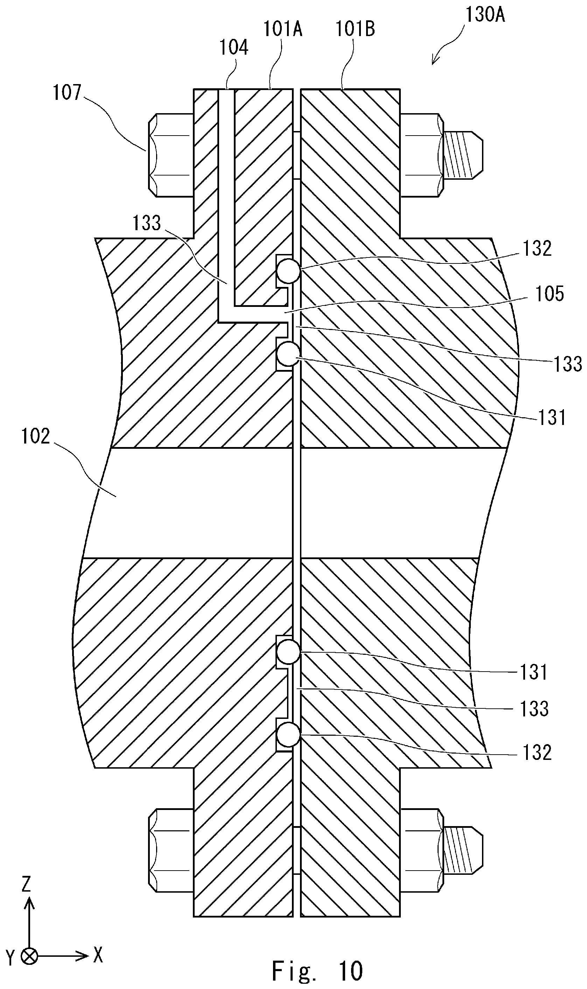

Next, the closed space formed in the connecting part will be described with reference to Fig. 10. Fig. 10 is a partial cross-sectional view of the barrel. Fig. 10 shows the connecting part 130A where the unit block 101A and the unit block 101B are connected to each other, and other connecting parts have configurations similar to that of the connecting part 130A.

In the connecting part 130A, the adjacent unit blocks 101A and 101B are connected to each other through the flange unit. The unit block 101A and the unit block 101B are fixed by means of a plurality of bolts and nuts which are connecting members 107.

The first gasket 131 and the second gasket 132 are held between the unit block 101A and the unit block 101B. The first gasket 131 is held between a pair of end faces opposed to each other in the connecting part 130 of the connected unit blocks 101 to surround the periphery of the hole 102. The second gasket 132 is held between the pair of end faces to further surround the periphery of the first gasket 131, to thereby form the closed space 133 around the hole 102. That is, the space surrounded by the first gasket 131 and the second gasket 132 is the closed space 133. The closed space 133 is connected to the fluid inlet 104 through the fluid supply port 105.

Note that the first gasket 131 and the second gasket 132 are, for example, hollow metal O-rings. Further, the first gasket 131 and the second gasket 132 may be O-rings with holes. The first gasket 131 and the second gasket 132 may be sealing members other than hollow metal O-rings.

By this configuration, the closed space 133 is filled with fluid from the fluid inlet 104. The closed space 133 filled with the fluid is separated from the hole 102 by the first gasket 131. Further, the closed space 133 is separated from the outside of the unit block 101 by the second gasket 132.

As described above, in the barrel 100, a plurality of the unit blocks 101 in which the holes 102 into which the screw 110 can be inserted are formed are connected to each other through the first gasket 131 and the second gasket 132 which are two annular gaskets. By this configuration, the barrel 100 forms the closed space 133 surrounding the hole 102 in the connecting part 130. At this time, when the sealing function of the first gasket 131 is deteriorated, fluid flows from the closed space 133 into the hole 102. Further, when the sealing function of the second gasket 132 is deteriorated, fluid flows from the closed space 133 to the outside of the barrel 100.

The configuration of the connecting part 130 has been described above. Note that, although not shown, the leakage monitoring unit 170 and the pressure adjustment unit 160 may be provided so as to be in contact with the fluid inlet 104. Further, the leakage monitoring unit 170 may be provided inside the unit block 101A along the hole constituting the closed space 133 of the unit block 101A.

By the above configuration, the barrel 100 can prevent gas in the barrel from leaking to the outside. Further, the barrel 100 can allow a user to easily recognize the deterioration of the sealing function of the gasket constituting the barrel. Further, the barrel 100 is configured so as to facilitate maintenance of the gasket constituting the barrel.

Note that the above-described program for performing the monitoring method includes instructions (or software codes) that, when loaded into a computer, cause the computer to perform one or more of the functions described in the embodiments. This program may be stored in a non-transitory computer readable medium or a tangible storage medium. By way of example, and not a limitation, computer readable media or tangible storage media can include a Random-Access Memory (RAM), a Read-Only Memory (ROM), a flash memory, a Solid-State Drive (SSD) or other types of memory technologies, a CD-ROM, a Digital Versatile Disc (DVD), a Blu-ray (Registered Trademark) disc or other types of optical disc storage, a magnetic cassette, a magnetic tape, and a magnetic disk storage or other types of magnetic storage devices. The program may be transmitted on a transitory computer readable medium or a communication medium. By way of example, and not a limitation, transitory computer readable media or communication media can include electrical, optical, acoustical, or other forms of propagated signals.

Although the present invention has been described with reference to the embodiments, the present invention is not limited to the above-described embodiments. Various changes that may be understood by those skilled in the art may be made to the configurations and details of the present invention within the scope of the invention. For example, the extruder and the barrel according to the present disclosure are not limited to a twin-screw extruder and a barrel. The extruder and the barrel according to the present disclosure may be a single-screw extruder and a barrel.

This application is based upon and claims the benefit of priority from Japanese patent application No. 2023-137865, filed on August 28, 2023, the disclosure of which is incorporated herein in its entirety by reference.

### Industrial Applicability

The present disclosure can be used, for example, as an extruder which extrudes a received raw material while kneading it and then discharges it.

### Reference Signs List

- 10: EXTRUDER
- 11: EXTRUDER
- 12: EXTRUDER
- 13: EXTRUDER
- 20: MONITORING APPARATUS
- 21: FLUID CONTROL UNIT
- 22: BARREL DATA RECEPTION UNIT
- 23: PRESSURE SETTING UNIT
- 24: LEAKAGE DATA RECEPTION UNIT
- 25: NOTIFICATION UNIT
- 26: STATE MANAGEMENT UNIT
- 29: STORAGE UNIT
- 100: BARREL
- 101: UNIT BLOCK
- 102: HOLE
- 103: RECESSED PART
- 104: FLUID INLET
- 105: FLUID SUPPLY PORT
- 106: CONNECTING HOLE
- 107: CONNECTING MEMBER
- 108: FLANGE UNIT
- 110: SCREW
- 111: RECEPTION PORT
- 112: DISCHARGE PORT
- 120: DRIVING APPARATUS
- 121: MOTOR
- 122: REDUCTION GEAR
- 130: CONNECTING PART
- 131: FIRST GASKET
- 132: SECOND GASKET
- 133: CLOSED SPACE
- 134: RELAY UNIT
- 150: FLUID SUPPLY UNIT
- 160: PRESSURE ADJUSTMENT UNIT
- 170: LEAKAGE MONITORING UNIT
- 180: BARREL DATA MEASUREMENT UNIT
- 190: TEMPERATURE ADJUSTMENT UNIT
- 200: POST-PROCESSING UNIT
- 210: STORAGE PART
- 211: EXHAUST VALVE
- 220: PIPE
- 230: RECOVERY APPARATUS
- 300: RAW-MATERIAL FEEDER
- M10: RAW MATERIAL
- M11: PROCESSING OBJECT

## Claims

1. An extruder comprising:
a barrel in which end faces of a plurality of unit blocks each including a hole into which a screw is able to be inserted are connected to each other through a connecting part;
a reception port configured to receive a processing object which has not yet been processed at one end of the barrel;
a discharge port configured to discharge the processing object which has been processed to a downstream side at an other end of the barrel; and
a screw rotatably housed in the barrel, the screw being configured to convey the processing object from the reception port to the discharge port,
wherein the extruder comprises:
a closed space surrounded by a first gasket surrounding the hole and a second gasket further surrounding the first gasket in the connecting part;
a pressure adjustment unit which is a mechanism configured to be able to adjust a pressure of the closed space when a predetermined fluid is supplied to a predetermined set pressure higher than an internal pressure of the hole when the extruder is operated; and
a leakage monitoring unit including a sensor configured to be able to detect leakage of the fluid in the closed space.

2. The extruder according to claim 1, further comprising a barrel data measurement unit configured to acquire barrel data about the internal pressure at a predetermined position in the barrel,
wherein the pressure adjustment unit is able to adjust the set pressure to a pressure higher than the internal pressure based on the received barrel data when the extruder is operated.

3. The extruder according to claim 2, further comprising:
a fluid supply unit configured to supply the fluid to the closed space through the pressure adjustment unit; and
a pressure setting unit configured to calculate the set pressure based on the barrel data and control the pressure adjustment unit so that the pressure of the closed space becomes the set pressure.

4. The extruder according to claim 3, wherein
the pressure adjustment unit includes an adjustment valve configured to be able to adjust the pressure of the closed space, and
the pressure setting unit controls the adjustment of the adjustment valve based on the set pressure.

5. The extruder according to claim 4, further comprising a storage part connected to the barrel on a downstream side of the discharge port, the storage part being configured to discharge gas received from the discharge port to an outside,
wherein the barrel or the storage part comprises a barrel data measurement unit configured to acquire the barrel data about the internal pressure in a vicinity of the discharge port.

6. The extruder according to claim 5, wherein
the barrel data measurement unit is a pressure gauge configured to measure the internal pressure, and
the pressure setting unit receives data about the internal pressure measured by the pressure gauge and sets the set pressure based on the data about the internal pressures at a plurality of points in time in a predetermined period.

7. The extruder according to claim 5, wherein
the barrel data measurement unit is a pressure gauge configured to measure the internal pressures at a plurality of different measurement positions along a direction in which the barrel extends, and
the pressure setting unit controls the pressure adjustment unit by the set pressure based on a pressure in a vicinity of the closed space estimated based on the internal pressures measured at the plurality of different measurement positions.

8. The extruder according to claim 1, further comprising a notification unit configured to notify a user that leakage of the fluid is detected when the leakage monitoring unit detects leakage of the fluid.

9. The extruder according to claim 1, wherein
the barrel includes the closed space in each of a plurality of the connecting parts provided along the direction in which the barrel extends, and
each of a plurality of the closed spaces includes the pressure adjustment unit and the leakage monitoring unit.

10. The extruder according to claim 9, further comprising:
a state management unit configured to manage a state of each of a plurality of the leakage monitoring units; and
a notification unit configured to, when one of the plurality of the leakage monitoring units detects leakage of the fluid, send a notification to a user so that the user is able to identify the connecting part where the leakage of the fluid is detected.

11. The extruder according to claim 1, wherein the leakage monitoring unit includes a flow sensor configured to be able to detect a flow of the fluid caused by leakage of the fluid in the closed space.

12. The extruder according to claim 1, wherein the leakage monitoring unit includes a pressure sensor configured to be able to detect a change in a pressure of the fluid caused by leakage of the fluid in the closed space.

13. The extruder according to according to any one of claims 1 to 10, further comprising a temperature adjustment unit configured to heat a periphery of the barrel, wherein
the reception port receives the processing object containing a predetermined plastic,
the screw conveys the processing object to be thermally decomposed, and
the discharge port discharges a plurality of kinds of substances generated by the thermal decomposition to a downstream side.

14. A barrel for an extruder in which a screw is housed by connecting a plurality of unit blocks to constitute an extruder, the barrel comprising:
each of the unit blocks is a cylindrical member in which a hole into which a screw is able to be inserted is formed;
a first gasket which is held between a pair of end faces opposed to each other in a connecting part of the connected unit blocks and surrounds a periphery of the hole;
a second gasket which is held between the pair of end faces and further surrounds a periphery of the first gasket, to thereby form a closed space in the periphery of the hole;
a pressure adjustment unit which is a mechanism configured to be able to adjust a pressure of the closed space to a predetermined set pressure higher than an internal pressure of the hole when the extruder is operated; and
a leakage monitoring unit including a sensor configured to be able to detect leakage of fluid in the closed space.

15. A monitoring apparatus for a barrel for an extruder constituting a barrel in which a plurality of unit blocks in each of which a hole into which a screw is able to be inserted is formed are connected to each other through two annular gaskets, to thereby form a closed space surrounding the hole in a connecting part, the monitoring apparatus comprising:
a barrel data reception unit configured to receive data about an internal pressure at a predetermined position in the barrel of an extruder that is operating;
a pressure setting unit configured to set a pressure of fluid supplied to the closed space so that a pressure of the closed space becomes higher than the internal pressure;
a leakage data reception unit configured to receive, from a leakage monitoring unit configured to detect leakage of the fluid in the closed space, data about the leakage; and
a notification unit configured to, when leakage of the fluid is detected, notify a user of information about the detection.

16. A method for monitoring a barrel for an extruder constituting a barrel in which a plurality of unit blocks in each of which a hole into which a screw is able to be inserted is formed are connected to each other through two annular gaskets, to thereby form a closed space surrounding the hole in a connecting part, the method comprising:
receiving data about an internal pressure at a predetermined position in the barrel of an extruder that is operating;
supplying fluid to the closed space so that a pressure of the closed space becomes higher than the internal pressure;
performing monitoring in such a manner that leakage of the fluid in the closed space is able to be detected; and
notifying, when leakage of the fluid is detected, a user of information about the detection.

17. A program for a monitoring method performed by a monitoring apparatus for a barrel for an extruder constituting a barrel in which a plurality of unit blocks in each of which a hole into which a screw is able to be inserted is formed are connected to each other through two annular gaskets, to thereby form a closed space surrounding the hole in a connecting part,
wherein the monitoring method comprises:
receiving data about an internal pressure at a predetermined position in the barrel of an extruder that is operating;
setting a pressure of fluid supplied to the closed space so that a pressure of the closed space becomes higher than the internal pressure;
receiving, from a leakage monitoring unit configured to detect leakage of the fluid in the closed space, data about the leakage; and
notifying, when leakage of the fluid is detected, a user of information about the detection.
